(19) Europäisches Patentamt
European Patent Office
Office européen des brevets

(11) **EP 4 016 675 B1**

(12) **EUROPEAN PATENT SPECIFICATION**

(45) Date of publication and mention
of the grant of the patent:
**27.08.2025 Bulletin 2025/35**

(21) Application number: **20866934.1**

(22) Date of filing: **29.09.2020**

(51) International Patent Classification (IPC):
*H01M 4/62* (2006.01)     *H01M 10/0525* (2010.01)
*H01M 4/04* (2006.01)

(52) Cooperative Patent Classification (CPC):
**H01M 4/622; H01M 4/0404; H01M 10/0525;**
**Y02E 60/10**

(86) International application number:
**PCT/CN2020/118828**

(87) International publication number:
**WO 2022/067507 (07.04.2022 Gazette 2022/14)**

(54) **BINDER INCLUDING COPOLYMER, AND ELECTROCHEMICAL DEVICE INCLUDING BINDER**

COPOLYMERHALTIGES BINDEMITTEL UND DIESES ENTHALTENDE ELEKTROCHEMISCHE VORRICHTUNG

LIANT COMPRENANT UN COPOLYMÈRE, ET DISPOSITIF ÉLECTROCHIMIQUE COMPRENANT LE LIANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**22.06.2022 Bulletin 2022/25**

(73) Proprietor: **Ningde Amperex Technology Ltd.**
**Ningde City, Fujian 352100 (CN)**

(72) Inventors:
• **LI, Jiawen**
**Ningde, Fujian 352100 (CN)**
• **SHI, Changchuan**
**Ningde, Fujian 352100 (CN)**
• **ZHANG, Qingwen**
**Ningde, Fujian 352100 (CN)**

(74) Representative: **Icosa**
**83 avenue Denfert-Rochereau**
**75014 Paris (FR)**

(56) References cited:
CN-A- 102 668 198      CN-A- 105 330 778
CN-A- 109 642 066      JP-A- 2019 091 793
US-A- 5 461 105         US-A1- 2003 176 579
US-A1- 2012 231 337    US-A1- 2018 057 624
US-A9- 2020 002 449

**Description**

**TECHNICAL FIELD**

This application relates to the electrochemical field, and in particular, to a binder comprising a copolymer and an electrochemical device containing the binder.

**BACKGROUND**

Lithium-ion batteries are widely used in the field of consumer electronics by virtue of characteristics such as a high specific energy, a high working voltage, a low self-discharge rate, a small size, and a light weight. With rapid development of electric vehicles and portable electronic devices, people impose higher requirements on performance of a lithium-ion battery, for example, require the lithium-ion battery to have a higher energy density, higher safety, higher cycle performance, and the like.

As a bonding material, a binder is commonly used in an electrode plate of the lithium-ion battery, a coating on a separator, a package (pocket), a packaging position of a tab, and the like. Existing binders typically include a water-soluble binder and a solvent-type binder, and are generally rigid and fragile, thereby deteriorating bonding performance. For example, when applied to an electrode plate, the existing binders are likely to cause detachment of electrode plate and flaking of powder, thereby affecting quality of the electrode plate. In addition, the existing binders are poorly resistant to an electrolytic solution, and the bonding force decreases significantly after soaking in the electrolytic solution, thereby affecting the performance of the lithium-ion battery. US 2020/002449, US 2003/176579, US 5 461 105, US 2018/057624, US 2012/231237 disclose composition comprising a propylene-ethylene copolymer having specific crystallinity and specific molar percent of the propylene monomer and specific molar percent of the second monomer.

**SUMMARY**

An objective of this application is to provide a binder comprising a copolymer and an electrochemical device containing the binder to improve bonding performance of the binder. Specific technical solutions are as follows:

A first aspect of this application provides a binder comprising a copolymer. The copolymer includes a polymer formed by copolymerizing a first monomer and a second monomer. The first monomer is a propylene monomer. A crystallinity of the copolymer is 10% to 40%. A molar percent of the first monomer in the total amount of all monomers in the copolymer is 30 mol% to 95 mol%. A molar percent of the second monomer in the total amount of all monomers in the copolymer is 5 mol% to 70 mol%. The binder further comprises an emulsifier, a defoamer and water. A weight percent of the copolymer in a total weight of the binder is 10 wt% to 50 wt%, A weight percent of the emulsifier in the total weight of the binder is 0.1 wt% to 5 wt%. A weight percent of the defoamer in the total weight of the binder is 0.0001 % to 0.1 %, and a remainder is water.

In an embodiment of this application, the second monomer is one or more selected from the group consisting of ethylene, butadiene, isoprene, styrene, acrylonitrile, ethylene oxide, propylene oxide, acrylate, vinyl acetate, caprolactone, and maleic anhydride.

In an embodiment of this application, the copolymer has one or more of the following properties:

a softening point of the copolymer is 70 °C to 90 °C;
a weight-average molecular weight of the copolymer is 500 to 1,000,000; and
D50 of the copolymer is 0.5 $\mu$m to 5 $\mu$m.

In an embodiment of this application, the emulsifier includes one or more selected from the group consisting of an anionic emulsifier, a cationic emulsifier, and a nonionic emulsifier. The anionic emulsifier includes one or more selected from the group consisting of fatty acid soap, alkyl sulfate, alkylbenzene sulfonate, and phosphate. The cationic emulsifier includes one or more selected from the group consisting of N-dodecyldimethylamine, amine derivative, and quaternary ammonium salt. The nonionic emulsifier includes one or more selected from the group consisting of polyoxyethylene ether, polyoxypropylene ether, ethylene oxide, propylene oxide block copolymer, polyol fatty acid ester, and polyvinyl alcohol.

In an embodiment of this application, the defoamer includes one or more selected from the group consisting of alcohol, fatty acid, fatty acid ester, phosphoric acid ester, mineral oil, amide, ethylene oxide, propylene oxide copolymer, polydimethylsiloxane, or a siloxane copolymer modified and grafted with a polyether segment and a polysiloxane segment.

In an embodiment of this application, a viscosity of the binder is 10 mPa·S to 5,000 mPa·S.

In an embodiment of this application, a swelling degree of the binder in an electrolytic solution is 0 to 55%.

A second aspect of this application provides an electrochemical device, including an electrode plate. The electrode plate includes the binder according to the first aspect of this application.

In an embodiment of this application, the electrode plate includes an electrode active material layer and a current collector. A bonding force between the electrode active material layer and the current collector is 500 N/m to 1,000 N/m.

A third aspect of this application provides an electronic device, including the electrochemical device according to the second aspect of this application.

This application provides a binder comprising a copolymer and an electrochemical device containing the binder. In contrast with the binder in the prior art, the binder according to this application includes a polymer formed by copolymerizing the first monomer and the second monomer. The crystallinity of the copolymer is 10% to 40%, the molar percent of the first monomer in the total amount of all monomers in the copolymer is 30 mol% to 95 mol%, and the molar percent of the second monomer in the total amount of all monomers in the copolymer is 5 mol% to 70 mol%. Therefore, by controlling the crystallinity of the copolymer and a molar ratio between the two monomers, this application achieves an appropriate softening point and high crystallinity of the binder containing the copolymer. In this way, the binder according to this application has higher adhesion and is more conducive to material processing. Therefore, the electrode plate containing the binder according to this application is more resistant to powder flaking after being hot-calendered or wound, and is of higher quality. In addition, the binder according to this application is highly resistant to an electrolytic solution, thereby improving the performance of the electrochemical device.

In this application, the term "D50" represents a particle size of a material at a cumulative volume of 50% in the volume-based particle size distribution, that is, a particle size measured when a volume of particles of the material that are smaller than the particle size accounts for 50% of a total volume of the material.

The term "softening point" means a temperature at which a substance softens.

The term "swelling degree" means a ratio of a swollen volume to a non-swollen volume when a swelling equilibrium is reached after polymer molecules adsorb solvent molecules.

## DETAILED DESCRIPTION OF EMBODIMENTS

To make the objectives, technical solutions, and advantages of this application clearer, the following describes this application in further detail with reference to drawings and embodiments. It is apparent that the described embodiments are merely a part of but not all of the embodiments of this application. All other embodiments derived by a person of ordinary skill in the art based on the embodiments of this application without making any creative efforts fall within the protection scope of this application.

This application provides a binder comprising a copolymer. The copolymer includes a polymer formed by copolymerizing a first monomer and a second monomer. The first monomer is a propylene monomer. A crystallinity of the copolymer is 10% to 40%. A molar percent of the first monomer in the total amount of all monomers in the copolymer is 30 mol% to 95 mol%. A molar percent of the second monomer in the total amount of all monomers in the copolymer is 5 mol% to 70 mol%.

The binder according this application is applicable to a nonaqueous lithium-ion battery, especially to preparing an electrode slurry composite of a lithium-ion battery. The electrode slurry composition prepared for a lithium-ion battery by using the binder according to this application can increase a bonding force between the electrode active material layer and the current collector, thereby improving performance such as cycle stability of the electrode.

The binder according to this application includes a copolymer. Monomers that form the copolymer include two monomers, of which a first monomer is selected from propylene monomers, and a molar percent of the first monomer in the total amount of monomers in the copolymer is 30 mol% to 95 mol%. Without being limited by any theory, a too small amount of the first monomer is not conducive to enhancing the bonding performance of the binder; and a too large amount of the first monomer affects anti-swelling performance of the binder in the electrolytic solution. By controlling the first monomer to fall within the foregoing molar percent, this application achieves high bonding performance of the binder and high anti-swelling performance of the binder in the electrolytic solution, and makes the binder highly stable to the electrolytic solution. Preferably, the molar percent of the first monomer in the total amount of all monomers in the copolymer is 50 mol% to 90 mol%, and more preferably, 60 mol% to 80 mol%.

The crystallinity of the copolymer according to this application is 10% to 40%. Without being limited to any theory, when the crystallinity of the copolymer is too high, the softening point of the material is too high, which is not conducive to enhancing the bonding performance of the binder and processing the electrode plate. A too low crystallinity of the copolymer affects the bonding performance of the binder and the anti-swelling performance of the binder in the electrolytic solution. By controlling the crystallinity of the copolymer according to this application to be within the foregoing range, the binder can achieve an appropriate softening point and high bonding performance.

Preferably, the second monomer is at least one selected from the group consisting of ethylene, butadiene, isoprene, styrene, acrylonitrile, ethylene oxide, propylene oxide, (meth)acrylate, vinyl acetate, caprolactone, and maleic anhydride. The molar percent of the second monomer in the total amount of monomers in the copolymer is 5 mol% to 70 mol%, preferably 10 mol% to 50 mol%, and more preferably 20 mol% to 40 mol%. Without being limited by any theory, a too small amount of the second monomer is not conducive to enhancing the anti-swelling performance of the binder in the electrolytic solution; and a too large amount of the second monomer is not conducive to enhancing the bonding performance of the binder. By controlling the second monomer to fall within the foregoing molar percent, this application achieves high bonding performance of the binder and high anti-swelling performance of the binder in the electrolytic solution, and thereby improves the cycle performance of the lithium-ion battery. The second monomer may be one of or a combination of monomers selected from the foregoing monomers. When the second monomer is a combination of monomers, the molar ratio between the monomers is not specifically limited, and may be any value to the extent meeting the requirements of this application.

Preferably, the softening point of the copolymer according to this application is 70 °C to 90 °C. Without being limited to any theory, a too high softening point of the copolymer is not conducive to processing the material and enhancing the bonding performance of the binder; and too low softening point of the copolymer makes the copolymer too soft, affects the cycle performance of the lithium-ion battery, and deteriorates the cycle capacity retention performance of the lithium-ion battery. By controlling the softening point of the copolymer according to this application to fall within the foregoing range, this application achieves a higher bonding performance of the binder. Especially, when being used in the electrode plate of the lithium-ion battery, the binder according to this application increases the bonding force between the electrode active material and the current collector, and the bonding force between particles of the electrode active material, and improves cycle stability of the lithium-ion battery.

Preferably, the weight-average molecular weight of the copolymer according to this application is 500 to 1,000,000, preferably, 1,000 to 100,000, and more preferably, 5,000 to 50,000. Without being limited by any theory, a too low weight-average molecular weight of the copolymer softens the copolymer, decreases the softening point of the copolymer, and is not conducive to enhancing the bonding performance of the binder; and a too high weight-average molecular weight of the copolymer leads to a too high softening point of the copolymer, and is not conducive to processing the material and enhancing the bonding performance of the binder. By controlling the weight-average molecular weight of the copolymer according to this application to fall within the foregoing range, this application accomplishes a binder of a high bonding performance, and improves the cycle stability of the lithium-ion battery.

Preferably, the copolymer according to this application is in the form of particles whose particle size D50 is 0.5 $\mu$m to 5 $\mu$m, and preferably 1 $\mu$m to 3.5 $\mu$m. Without being limited by any theory, when D50 of the copolymer is too high, that is, when the particle size is too large, the bonding performance of the binder is uneven, and the bonding performance of the binder is adversely affected. When D50 of the copolymer is too low, a specific surface area of the particles of the copolymer increases, and kinetic performance of the lithium-ion battery is adversely affected. By controlling the particle size of the copolymer according to this application to fall within the foregoing range, the bonding effect in the electrode active material is more significant.

The method for preparing the copolymer according to this application is not particularly limited, and may be a preparation method known to a person skilled in the art. The preparation method may be selected depending on the type of the monomer adopted, and may be a solution method, a slurry method, a vapor phase method, or the like.

For example, when the second monomer is selected from ethylene monomer, the copolymer may be prepared by using following method:
dissolving a main catalyst and a cocatalyst in hexane separately to obtain a hexane solution of the main catalyst and a hexane solution of the cocatalyst, adding the hexane into a reaction vessel, and then adding a main catalyst slurry and a cocatalyst slurry into the reaction vessel under protection of nitrogen; feeding propylene and ethylene into the reaction vessel, and increasing the temperature to 50 °C~60 °C; during reaction, and maintaining the pressure in the reaction vessel at 0.3 MPa to 0.5 MPa; after reaction for 0.5 h to 2 h, terminating the reaction by using acidified ethanol; washing a product of the reaction for 3 to 5 times by using anhydrous ethanol; and, after filtering, drying the product in a vacuum drying oven at 50 °C to 70 °C for 3 h to 5h.

The main catalyst and the cocatalyst are not particularly limited in this application, and are appropriate as long as the invention objectives of this application are achieved. For example, a metallocene catalyst system is used. In the metallocene catalyst system, the main catalyst includes a metallocene complex (such as ferrocene or a derivative thereof), and the cocatalyst includes methylaluminoxane. The dosage of the main catalyst and the cocatalyst is not limited in this application, and is appropriate as long as the invention objectives of this application are achieved. In addition, before reaction in the reaction vessel, the reaction vessel may be vacuumed and then filled with nitrogen. This process is repeated for 3 to 5 times to make the reaction vessel clean.

When the second monomer is selected from butadiene, the method for preparing the second monomer is identical to the method for preparing the propylene-ethylene copolymer except that the ethylene in the method for preparing the propylene-ethylene copolymer is replaced with butadiene.

When the second monomer is selected from acrylate, the method for preparing the second monomer is identical to the method for preparing the propylene-ethylene copolymer except (i) the ethylene in the method for preparing the propylene-ethylene copolymer is replaced with acrylate, and (ii) the hexane, the main catalyst slurry, and the cocatalyst slurry are added into the reaction vessel under protection of nitrogen, and propylene is fed into the reaction vessel after the acrylate is added.

The methacrylate monomer may be any one selected from methyl acrylate, methyl methacrylate, ethyl acrylate, ethyl methacrylate, butyl acrylate, isooctyl acrylate, and hydroxyethyl acrylate.

For copolymerization of other monomers, the preparation method known in the art may be used, details of which are omitted herein.

The binder according to this application may be directly used to prepare an electrode slurry composite of a nonaqueous lithium-ion battery. For example, the binder according to this application may be directly added to an electrode slurry composite group as a binder, or may be combined with a binder in the prior art and added into the electrode slurry composite as a binder.

The binder according to this application further includes an emulsifier, a defoamer, and water. A weight percent of the copolymer in a total weight of the binder is 10 wt% to 50 wt%. A weight percent of the emulsifier in the total weight of the binder is 0.1 wt% to 5 wt%. A weight percent of the defoamer in the total weight of the binder is 0.0001% to 0.1%, and a remainder is water.

Preferably, the emulsifier is one or more selected from the group consisting of an anionic emulsifier, a cationic emulsifier, and a nonionic emulsifier. The anionic emulsifier includes one or more selected from the group consisting of fatty acid soap, alkyl sulfate, alkylbenzene sulfonate, and phosphate. The cationic emulsifier includes one or more selected from the group consisting of N-dodecyldimethylamine, amine derivative, and quaternary ammonium salt. The nonionic emulsifier includes one or more selected from the group consisting of polyoxyethylene ether, polyoxypropylene ether, ethylene oxide, propylene oxide block copolymer, polyol fatty acid ester, and polyvinyl alcohol.

Preferably, the defoamer includes one or more selected from the group consisting of alcohol, fatty acid, fatty acid ester, phosphoric acid ester, mineral oil, amide, ethylene oxide, propylene oxide copolymer, polydimethylsiloxane, and a siloxane copolymer modified and grafted with a polyether segment and a polysiloxane segment.

For convenience of preparation, storage, and use, a viscosity of the binder according to this application is preferably 10 mPa·S to 5,000 mPa·S, and more preferably, 200 mPa·S to 2,000 mPa·S.

In the nonaqueous lithium-ion battery, the swelling degree of the binder in the electrolytic solution affects the performance of the battery. The swelling degree of the binder in the electrolytic solution means performance of the binder that swells when absorbing the electrolytic solution or the solvent in the electrolytic solution after soaking in the electrolytic solution after the binder is dried to form a film. Specifically, the swelling degree means a ratio of a swollen volume to a non-swollen volume when a swelling equilibrium is reached after polymer molecules in the binder adsorb solvent molecules. A too high swelling degree of the binder may decrease the bonding performance of the electrode active material and reduce the cycle performance of the lithium-ion battery. Preferably, the swelling degree of the binder in the electrolytic solution is 0 to 55%.

This application further provides an electrochemical device, including an electrode plate. The electrode plate includes the binder according to any one of the foregoing embodiments.

The electrode plate includes an electrode active material layer and a current collector. The electrode active material layer is usually obtained by coating the current collector with an electrode slurry composite. In an implementation solution of this application, the bonding force between the electrode active material layer and the current collector is 500 N/m to 1,000 N/m. In this way, the bonding force between the electrode active material layer and the current collector is very high, and the electrode plate is more resistant to powder flaking after being hot-calendered or wound and achieves higher quality.

The electrode slurry composite according to this application includes a positive slurry composite and a negative slurry composite. The positive slurry composite includes a positive active material, and the negative slurry composite includes a negative active material.

The positive active material is not particularly limited in this application, and a positive active material used in this technical field may be used. For example, the following compounds may be used appropriately: lithium iron phosphate ($LiFePO_4$), lithium manganese phosphate ($LiMnPO_4$), lithium cobalt phosphate ($LiCoPO_4$), lithium iron pyrophosphate ($Li_2FeP_2O_7$), lithium cobalt composite oxide ($LiCoO_2$), spinel-type lithium manganese composite oxide ($LiMn_2O_4$), lithium manganese composite oxide ($LiMnO_2$), lithium nickel composite oxide ($LiNiO_2$), lithium niobium composite oxide ($LiNbO_2$), lithium ferrite composite oxide ($LiFeO_2$), lithium magnesium composite oxide ($LiMgO_2$), lithium calcium composite oxide ($LiCaO_2$), lithium copper composite oxide ($LiCuO_2$), lithium zinc composite oxide ($LiZnO_2$), lithium molybdenum composite oxide ($LiMoO_2$), lithium tantalum composite oxide ($LiTaO_2$), lithium tungsten composite oxide ($LiWO_2$), lithium-nickel-cobalt-aluminum composite oxide ($LiNi_{0.8}Co_{0.15}Al_{0.05}O_2$), lithium-nickel-cobalt-manganese composite oxide ($LiNi_xCo_yMn_{1-x-y}O_2$, where $0 < x <1$, $0 < y <1$, and $x + y < 1$), Li-excess system nickel-cobalt-manganese composite oxide, nickel manganese oxide ($LiNi_{0.5}Mn_{1.5}O_4$), manganese oxide ($MnO_2$), vanadium oxide, sulfur oxide, silicate oxide, and the like. The foregoing compounds may be used singly or at least two thereof may be used together.

The negative active material is not particularly limited in this application, and a negative active material capable of absorbing and releasing lithium ions may be used. For example, the material may include at least one element selected from Li, Na, C (such as graphite), Mg, Al, Si, P, K, Ca, Sc, Ti, V, Cr, Mn, Fe, Co, Ni, Cu, Zn, Ga, Ge, Y, Zr, Nb, Mo, Pd, Ag, Cd, In, Sn, Sb, W, Pb, or Bi, or an alloy, oxide, chalcogenide, or halide thereof. A simple substance, alloy, compound, and solid solution of such materials may be used. It needs to be noted that the foregoing materials may be used singly or at least two thereof may be used together as a negative active material.

From a perspective of a long cycle life, carbon is preferred. Carbon may be carbon materials such as graphite, hard carbon, and soft carbon. In addition, a material obtained by mixing or compounding such carbon materials with other materials capable of reversibly absorbing and releasing lithium ions may also be used. Specifically, if a composite active material such as a silicon-containing material compounded of graphite and Si and a tin-containing material compounded of hard carbon and Sn is applied, the effects of this embodiment can be exerted more effectively.

In addition, from a perspective of a higher energy density of the battery, the negative active material is preferably a silicon-based material or a material compounded of a silicon-based material and another material, for example, silicon, a silicon-oxygen compound, and a silicon-carbon composite.

The electrode slurry composite according to this application may further include a conductive agent. The conductive agent is not particularly limited as long as it is electronically conductive. Preferably, the conductive agent is carbon powder. Carbon powder may be carbon materials such as acetylene black (AB), Ketjen black (KB), graphite, carbon fiber, carbon tubes, graphene, amorphous carbon, hard carbon, soft carbon, glassy carbon, carbon nanofiber, and carbon nanotubes (CNT). The foregoing materials may be used singly or at least two thereof may be used together. From a perspective of higher conductivity, carbon nanofibers and carbon nanotubes are preferred, and carbon nanotubes are more preferred. When carbon nanotubes are used as the conductive agent, the weight percent of the carbon nanotubes is not particularly limited. For example, preferably, the weight of the carbon nanotubes is 30% to 100% of the total weight of the entire conductive agent, and more preferably, 40% to 100%. When the weight percent of the carbon nanotubes is less than 30%, sometimes it is not ensured that a sufficient conductive path is formed between the electrode active material and the current collector, and especially a sufficient conductive path formed during high-speed charging and discharging. Therefore, such a weight percent is not preferred. It needs to be noted that the carbon nanofiber means a fibrous material that is several nm to several hundred nm in thickness. Especially, a carbon nanofiber having a hollow structure is called a carbon nanotube, classed into single-layered carbon nanotubes, multilayered carbon nanotubes, and the like. The carbon nanotubes are manufactured by using various methods such as vapor deposition, arc discharge, and laser evaporation, and the methods are not limited.

The electrode slurry composite according to this application may further include a dispersant as required. The dispersant increases dispersibility of the active material and the conductive agent in the electrode slurry composite. Preferably, the dispersant is an organic acid having a molecular weight of 100,000 or less and soluble in an aqueous solution whose pH value is 7 to 13. Preferably, the organic acid contains a carboxyl and is at least one selected from the group consisting of a hydroxyl, an amino group, and an imino group. Although not particularly limited, the organic acid may include, for example, a compound having a carboxyl and a hydroxyl such as lactic acid, tartaric acid, citric acid, malic acid, glycolic acid, malonic acid, glucuronic acid, and humic acid; a compound having a carboxyl and an amino group such as glycine, alanine, phenylalanine, 4-aminobutyric acid, leucine, isoleucine, and lysine; and a compound having a plurality of carboxyls and amino groups such as glutamic acid and aspartic acid; a compound having a carboxyl and an imino group such as proline, 3-hydroxyproline, 4-hydroxyproline, and pipecolic acid; and a compound having a carboxyl and a functional group other than the hydroxyl and the amino group, such as glutamine, asparagine, cysteine, histidine, and tryptophan. From a perspective of high availability, glucuronic acid, humic acid, glycine, aspartic acid, and glutamic acid are preferred.

From a perspective of being water-soluble, the molecular weight of the dispersant is preferably 100,000 or less. When the molecular weight exceeds 100,000, hydrophobicity of molecules may become higher, and homogeneity of the slurry may be impaired.

This application further provides an electrode plate. The electrode plate may be prepared by using a method available in this technical field. For example, the electrode plate may be prepared by disposing an electrode active material layer on the current collector (for ease of description in this application, the material layer obtained by drying the electrode slurry composite coated onto the current collector is called an electrode active material layer). More specifically, for example, the electrode plate may be prepared by coating the electrode slurry composite onto the current collector (and drying as required). In addition, the electrode active material layer may be tightly bonded to the current collector by using a pressing machine (such as a calendering machine). The electrode plate is a component configured to convert chemical energy into electrical energy. Charging and discharging are accompanied with oxidation reaction and reduction reaction of the active material in the electrode plate. A negative electrode plate is an electrode plate that reacts by absorbing or inserting lithium ions during charging, and by releasing or extracting lithium ions during discharging. A positive electrode plate is an electrode plate that reacts by releasing or extracting lithium ions during charging, and by absorbing or inserting lithium ions during discharging.

In this application, the material of the current collector of the negative electrode plate is not particularly limited as long as the material is electronically conductive and can conduct electricity in the maintained negative active material. For example, the material may be a conductive substance such as C, Cu, Ni, Fe, V, Nb, Ti, Cr, Mo, Ru, Rh, Ta, W, Os, Ir, Pt, Au, Al, or the like, or an alloy (such as stainless steel) containing two or more of such conductive substances. Alternatively, the material may be a material obtained by plating a conductive substance with a different conductive substance (for example, a material obtained by plating Fe with Cu). From a perspective of high conductivity, a high stability in the electrolytic solution, and a high resistance to oxidation, the material of the current collector is preferably Cu, Ni, stainless steel, or the like. Further, from a perspective of cost-efficiency, the material is preferably Cu and Ni.

The material of the current collector of the positive electrode plate is not particularly limited as long as the material is electronically conductive and can conduct electricity in the maintained positive active material. For example, the material may be a conductive substance such as C, Ti, Cr, Mo, Ru, Rh, Ta, W, Os, Ir, Pt, Au, Al, or the like, or an alloy (such as stainless steel) containing two or more of such conductive substances. From a perspective of high conductivity, a high stability in the electrolytic solution, and a high resistance to oxidation, the material of the current collector is preferably C, Al, stainless steel, or the like. Further, from a perspective of cost-efficiency, the material is preferably Al.

Although not particularly limited, the shape of the current collector is preferably plate-like foil-like. Plates or foils made of the foregoing materials may be exemplified.

In this application, for example, the negative electrode plate may be obtained by using the following method: coating the current collector with the negative active material, the binder, water, and a substance compounded of the conductive agent and the dispersant added as required, and performing heat treatment after pre-drying.

The binder used in preparing the slurry may be dispersed in water in advance. Alternatively, powders of the active material, the conductive agent, the binder, and the dispersant may be mixed before water is added for mixing.

Water is used as a medium for dispersing the binder, the active material, and the conductive agent. To improve dispersibility of the active material and the conductive agent in the slurry, the dispersant is added preferably.

A concentration of solid ingredients of the slurry (the negative active material, the binder, and the conductive agent and dispersant added as required) is not particularly limited. For example, when the total weight percent of the slurry is set to 100%, the concentration is preferably 20 % to 80%, and more preferably, 30% to 70%. When the concentration of the slurry made from the solid ingredients falls within the foregoing range, the operation is easy, and cracks are not likely to occur on the electrode active material layer in drying the electrode plate.

The method for drying the electrode plate is not particularly limited as long as the method can volatilize and remove the solvent in the slurry. For example, the drying method may be heat treatment performed in the atmosphere at a temperature of 50 °C to 300 °C. The drying methods include natural drying, warm air drying, heating, and far-infrared radiation drying, and any one of the methods may be selected.

The thickness of the negative active material layer is preferably within a range of 20 $\mu$m to 300 $\mu$m. When the thickness is 20 $\mu$m or more, a capacity density of the electrode is increased, and the temperature rise of the battery during a short circuit is likely to be suppressed. When the thickness is 300 $\mu$m or less, a resistivity is not high, time consumed in charging and discharging is short, and expansion in size is suppressed. Therefore, the cycle life meets expectation, and battery performance can be fully exerted as expected.

The weight percent of the conductive agent in the total weight of the active material, the conductive agent, and the binder is preferably 5% or less (that is, greater than 0% but less than or equal to 5%), and preferably approximately 0.01% to approximately 5%, more preferably, approximately 0.1% to approximately 4%, and even more preferably, 0.5% to 3%. That is, the conductive agent is added as required, and the weight percent of the conductive agent is preferably 5% or less. When the weight percent of the conductive agent exceeds 5%, the temperature rise of the battery during a short circuit of the battery is likely to increase. In addition, the weight percent of the active material is relatively lower, and therefore, a high capacity of the battery is hardly available during charging and discharging. Carbon is hydrophobic and thus difficult to evenly disperse, and leads to agglomeration of the active materials. Compared with the active materials, the conductive agent is small in size. Therefore, when the weight percent of the conductive agent increases, an overall surface area of the active materials and the conductive agent increases, and the amount of the binder in use increases.

The weight percent of the binder is not particularly limited. For example, the weight percent of the binder in the total weight of the negative active material, the conductive agent, and the binder is preferably 0.5% to 15%, more preferably 1% to 10%, and even more preferably, 1.5% to 5%. When the weight percent of the binder is too high, a resistance of the electrode is likely to become too high, and input/output characteristics are likely to be poor. In addition, the weight percent of the active material is relatively lower, and therefore, a high capacity of the battery during charging and discharging is likely to be unavailable. Conversely, when the weight percent of the binder is too low, the electronic conductivity of the electrode is likely to increase, but heat is likely to be emitted rapidly during a short circuit. In addition, the cycle life of the battery is likely to be affected by an insufficient bonding force, and agglomeration is likely to be caused by insufficient bonding force of the slurry.

When the weight percent of the dispersant in the total weight of the negative active material, the binder, and the conductive agent is 0.01% or more, substances such as the active material can be microdispersed efficiently and effectively in preparing a dispersed solution of the active material. It needs to be noted that, in order to maintain microdispersibility and dispersion stability, the weight percent being 5.0% or less is sufficient.

In this application, for example, the positive electrode plate may be obtained by using the following method:

coating the current collector with the positive active material, the binder, the solvent, and a substance compounded of the conductive agent and the dispersant added as required, and performing heat treatment after pre-drying.

The binder may be the binder disclosed in this application, or may be a substance that, as well known in this technical field, can serve as a binder of the positive electrode of a lithium-ion battery. From a perspective of oxidation resistance, preferably, the binder may be, for example, polyvinylidene difluoride (PVDF), and polytetrafluoroethylene (PTFE). The method for preparing the slurry may be identical to the preparation method of the slurry in the negative electrode, for example.

The concentration of solid ingredients of the slurry (the positive active material, the binder, and the conductive agent and dispersant added as required) is not particularly limited. For example, when the total weight percent of the slurry is set to 100%, the concentration of the solid ingredients is preferably 20 % to 80%, and more preferably, 30% to 70%. When the concentration of the slurry made from the solid ingredients falls within the foregoing range, the operation is easy, and cracks are not likely to occur on the electrode active material layer in drying the electrode plate.

The method for drying the electrode plate is not particularly limited as long as the method can volatilize and remove the solvent in the slurry. For example, the drying method may be heat treatment performed in the atmosphere at a temperature of 50 °C to 300 °C. The drying methods include natural drying, warm air drying, and far-infrared radiation drying, and are not particularly limited.

The drying is performed by using far-infrared radiation so that the concentration of the binder in a cross section of the positive active material layer is unlikely to be uneven. The positive electrode is also appropriate without a concentration gradient of the binder. As observed in the positive electrode, no significant change in heat emitted during a short circuit is caused by the concentration gradient of the binder.

The weight percent of the conductive agent in the total weight of the positive active material, the conductive agent, and the binder is preferably approximately 0.1% to approximately 30%, more preferably, approximately 0.5% to approximately 20%, and even more preferably, 1% to 10%. That is, the weight percent of the conductive agent is preferably greater than or equal to 0.1% but less than 30%. When the weight percent of the conductive agent is greater than 30%, the weight percent of the active material is relatively lower, and therefore, a high capacity of the battery is hardly available during charging and discharging. Carbon is hydrophobic and thus difficult to evenly disperse, and leads to agglomeration of the active materials. Compared with the active materials, the conductive agent is small in size. Therefore, the surface area of the active materials increases, and the amount of the binder in use increases. Therefore, such a weight percent is not preferred. By setting the weight percent of the conductive agent to at least 0.1%, this embodiment improves the input and output characteristics of the battery.

The weight percent of the binder is not particularly limited. For example, the weight percent of the binder in the total weight of the positive active material, the conductive agent, and the binder is preferably 0.5% to 30%, more preferably 1% to 20%, and even more preferably, 1.5% to 10%. When the weight percent of the binder is too high, a resistance of the electrode is likely to become too high, and input/output characteristics are likely to be poor. In addition, the weight percent of the active material is relatively lower, and therefore, a high capacity of the battery during charging and discharging is likely to be unavailable. Conversely, when the weight percent of the binder is too low, the cycle life of the battery is likely to be affected by an insufficient bonding force, and agglomeration is likely to be caused by insufficient bonding force of the slurry.

When the weight percent of the dispersant in the total weight of the active material, the binder, and the conductive agent is 0.01% or more, substances such as the active material can be dispersed efficiently and effectively in preparing a dispersed solution of the active material. It needs to be noted that, in order to maintain dispersibility and dispersion stability, the weight percent is generally 5.0% or less.

### <Lithium-ion battery>

A method for preparing the lithium-ion battery includes: stacking the electrode plate (the positive electrode plate or the negative electrode plate) and the opposite electrode plate (the negative electrode plate or the positive electrode plate) that are obtained above and interspaced with a separator; and sealing the stacked materials soaked in the electrolytic solution, to form a lithium-ion battery, and specifically, to form a stacked battery or a jelly-roll battery.

Components of the battery are described below in detail.

<Separator>

In this application, the separator is not particularly limited, and any separator known in this technical field may be used.

The form of the separator may be, for example, a microporous film, a woven fabric, a nonwoven fabric, and a compressed powder. From a perspective of output characteristics and a high strength of the separator, the form of the separator is preferably a microporous film and a nonwoven fabric.

The substrate of the separator is not particularly limited as long as the substrate is resistant to the electrolytic solution. Preferably, the substrate of the separator is a heat-resistant polymer substrate that does not melt when heat is locally emitted during a short circuit.

Preferably, the material of the polymer substrate of the separator is a material (resin) such as polyethylene (PE), polypropylene (PP), polyamide, polyamide imide, polyimide, polyethylene terephthalate (PET), and ethylene-propylene copolymer (PE/PP).

In addition, preferably, the separator used in this application is a separator made of a polymer whose melting point or glass transition temperature is 140 °C or higher (preferably higher than 140 °C, more preferably 145 °C or higher, and even more preferably 150 °C or higher). Extraordinarily preferably, the separator used in this application is a separator made of a polymer whose a melting point is 140 °C or higher (preferably higher than 140 °C, more preferably 145 °C or higher, and even more preferably 150 °C or higher).

The polymer whose melting point or glass transition temperature is 140 °C or higher (when both a melting point and a glass transition temperature exist, the polymer whose melting point is 140 °C or higher is preferred) is, for example, aramid, polyimide, polyamide imide, polysulfone, polyethersulfone, polyetherimide, polyphenylene oxide (polyphenylene oxide), polybenzimidazole, polyarylate, polyacetal, polyphenylene sulfide, polyetherketone, polyester, polynaphthalene ethylene glycol diformate, and ethylene-cycloolefin copolymer. The foregoing polymers may be used singly or at least two thereof may be used together.

**<Electrolytic solution>**

An electrolyte of the lithium-ion battery according to this application may be a solid electrolyte or an ionic liquid, and preferably an electrolytic solution obtained by mixing an electrolyte and a solvent.

The electrolyte needs to contain lithium ions. Therefore, an electrolyte salt is not particularly limited as long as it is an electrolyte salt used in a lithium-ion battery. Preferably, the electrolyte salt is a lithium salt. Specifically, the lithium salt is at least one selected from any combination of lithium hexafluorophosphate, lithium perchlorate, lithium tetrafluoroborate, lithium trifluoromethanesulfonate, and lithium triflate imide.

The solvent of the foregoing electrolyte may be at least one selected from any combination of propylene carbonate (PC), ethylene carbonate (EC), dimethyl carbonate (DMC), diethyl carbonate (DEC), $\gamma$-butyrolactone, 2-methyltetrahydrofuran, 1,3-dioxolane, 4-methyl-1,3-dioxolane, 1,2-dimethoxyethane, 1,2-diethoxyethane, diethyl ether, sulfolane, methyl sulfolane, nitromethane, N,N-dimethylformamide, and dimethyl sulfoxide, and extraordinarily preferably an EC-DEC mixture, propylene carbonate, or $\gamma$-butyrolactone. It needs to be noted that a mixing ratio of the EC-DEC mixture may be arbitrarily adjusted to the extent that a volume percent of both EC and DEC falls within 10~90 vol%.

Preferably, the additive in the electrolytic solution contains vinylene carbonate (VC). The added VC reduces the amount of heat emitted during a short circuit. The weight percent of VC in the electrolytic solution is preferably 0.1% to 5%, more preferably 0.5% to 2%, and even more preferably 0.75% to 1.5%.

The lithium-ion battery according to the application is excellent in safety, and therefore, can be used as a power supply to various electronic devices (including electric means of transport).

The electronic devices may be, for example, household electronic devices, electric means of transport, and personal computers.

It needs to be noted that in specific embodiments of this application, this application is construed by using a lithium-ion battery as an example of the electrochemical device, but the electrochemical device according to this application is not limited to the lithium-ion battery.

**Embodiments**

This following describes this application with reference to preparation embodiments, embodiments, and comparative embodiments, but the application is not limited thereto. It needs to be noted that, unless otherwise expressly specified herein, "volume unit" and "vol%" in this embodiment indicate a volume fraction.

**Test methods and devices**

Method for determining a molar ratio of a propylene monomer in the copolymer:
The method includes: taking a weight (such as 0.2 mg) of the copolymer to perform infrared analysis through Fourier Transform Infrared Spectroscopy (FTIR) by using a general-purpose instrument (such as a Fourier transform infrared spectrometer), where a molar weight ratio of the propylene monomer to the second monomer in the copolymer is a ratio of a characteristic peak area of the propylene to the second monomer, and A1165 represents the characteristic peak area of the propylene.

Method for determining the crystallinity of the copolymer:

The method includes: increasing the temperature of an amount (such as, 5mg) of a binder sample to 180 °C at a specific speed (such as 5 °C/min) by using a general-purpose differential scanning calorimeter (DSC), keep the temperature constant for 2 minutes, and then decreasing the temperature to 80 °C at a specific speed (such as 5 °C/min), and calculating the crystallinity according to the following formula by using the DSC method:

$$\text{Crystallinity} = \Delta H_m / \Delta H_m^0$$

where, $\Delta H_m$ and $\Delta H_m^0$ are the heat of fusion of the sample and the heat of fusion of a fully crystalline sample, respectively.

Method for determining the particle size of the copolymer:

The particle size D50 of the copolymer is determined by using a laser particle analyzer.

Method for testing the softening point of the copolymer:

The DSC method is applied, including: taking 5 mg of a binder sample, increasing the temperature of the sample to 150 °C at a specific speed (such as 5 °C/min), collecting a DSC curve, and determining the softening point of the copolymer according to the obtained DSC curve.

Method for determining the swelling degree of the binder:

The method includes: drying a dispersed solution containing the binder at 80 °C to form an adhesive film that is approximately 2 mm~3mm in thickness, cutting the adhesive film to obtain an adhesive film sample whose weight is 1 g~2 g, weighing the adhesive film sample before soaking in the electrolytic solution, denoted as $W_1$, soaking the adhesive film sample in the electrolytic solution at 60 °C for 7 days (the weight ratio of the electrolytic solution to the adhesive film sample is 50:1, and the weight ratio of ingredients of the electrolytic solution is ethylene carbonate : propylene carbonate : diethyl carbonate : ethyl propionate = 30:10:30:30), wiping off the solvent on the surface of the adhesive film sample, weighing the swollen adhesive film sample, denoted as $W_2$, and calculating the swelling degree $\triangle W_1$ of the adhesive film sample according to the following formula:

$$\triangle W_1 = (W_2 - W_1)/W_1 \times 100\%$$

where, $W_1$ represents the weight of the adhesive film sample before soaking in the electrolytic solution, and $W_2$ represents the weight of the adhesive film sample after soaking in the electrolytic solution.

To ensure reliability of the test results, a plurality of samples whose thicknesses are as identical as practicable may be selected for testing. Each sample is measured for a plurality of times, for example, three times, and then an average value is calculated.

Method for determining the bonding force of a hot-calendered binder:

The method includes: cutting the hot-calendered electrode plate into a long-strip-shaped electrode plate sample that has a length and a width (for example, $1 \times 2$ cm), fixing the copper foil (that is, current collector) side of the electrode plate sample onto an aluminum sheet by using adhesive tape, affixing the side coated with the slurry (that is, the active material layer) onto a 3M adhesive tape, slowly peeling off the 3M adhesive tape from the surface of the electrode plate sample at an angle of 180° by using a versatile tensile tester until the active material layer is separated from the current collector, recording a stable tensile force at the time of the separation, and calculating the bonding force of the hot-calendered binder based on the measured values. To ensure accuracy of the test results, each sample may be tested for a plurality of times, for example, 3 times, and then the measured values are averaged.

Method for determining the bonding force of the binder after soaking in the electrolytic solution:

The method includes: soaking the electrode plate in the electrolytic solution for 48 h, cutting the electrode plate into a long-strip-shaped electrode plate sample that has a length and a width (for example, $1 \times 2$ cm), fixing the copper foil (that is, current collector) side of the electrode plate sample onto an aluminum sheet by using adhesive tape, affixing the side coated with the slurry (that is, the active material layer) onto a 3M adhesive tape, slowly peeling off the 3M adhesive tape from the surface of the electrode plate sample at an angle of 180° by using a versatile tensile tester until the active material layer is separated from the current collector, recording a stable tensile force at the time of the separation, and calculating, based on the measured values, the bonding force of the binder that has been soaked in the electrolytic solution. To ensure accuracy of the test results, each sample may be tested for a plurality of times, for example, 3 times, and then the measured values are averaged.

Method for testing the cycle performance of the lithium-ion battery:

The method includes: charging the battery at a constant current of 0.5 C and at a temperature of 25 °C until the voltage reaches 4.45 V, charging the battery at a constant voltage until the current reaches 0.025 C, leaving the battery to stand for 5 minutes, and then discharging the battery at a current of 0.5 C until the voltage reaches 3.0 V, measuring the capacity of the battery, which is recorded as an initial capacity, and then performing 50 charge and discharge cycles in which the battery is charged at a current of 0.5 C and discharged at a current of 0.5 C, and calculating a ratio of the capacity of the lithium-ion battery to the initial capacity.

**Embodiment 1**

**<1-1. Preparing a copolymer>**

The method for preparing a copolymer includes: in a 1 L stainless steel reaction vessel, under protection of nitrogen, adding 77 volume units (vol%) of hexane solvent, 19 volume units (vol%) of hexane solution with ferrocene as a main catalyst (the content of ferrocene is 70 mg/L), and 4 volume units (vol%) of hexane solution with methylaluminoxane as a cocatalyst (the content of methylaluminoxane is 10 mg/L), and then feeding in ethylene/propylene mixed gas, increasing the temperature to 50 °C, controlling the pressure of the reaction vessel to be 0.4 MPa, adjusting the dosage of ethylene/propylene so that the molar ratio between the first monomer and the second monomer is 30:70, leaving the reaction to last for 1 hour, and then terminating the reaction by using acidified ethanol, and washing a resulting product for 3 times by using anhydrous ethanol, filtering the product, and putting the product into a 60 °C vacuum drying oven to dry for 4 hours.

**<1-2. Preparing a binder>**

The prepared propylene-ethylene copolymer is mixed with emulsifier, defoamer, and deionized water at a mixing ratio of 40%:0.2%:0.009%:59.791% to obtain a binder.

**<1-3. Preparing a positive electrode plate>**

The method for preparing a positive electrode plate includes: mixing lithium cobalt oxide ($LiCoO_2$) as a positive active material, conductive carbon black (Super P), and the binder at a weight ratio of lithium cobalt oxide : conductive carbon black : binder = 97.5:1.0:1.5, and then adding NMP as a solvent, blending the mixture into a slurry with a solid content of 75%, and stirring the slurry evenly; coating one surface of a 12 $\mu$m thick aluminum foil with the slurry evenly, and drying the aluminum foil at a temperature of 90 °C to obtain a positive electrode plate on which the coating thickness is 100 $\mu$m, and then repeating the foregoing steps on the other surface of the positive electrode plate to obtain a positive electrode plate coated with the positive active material layer on both sides; and cutting the positive electrode plate into a sheet that is 74 mm $\times$ 867 mm in size.

**<1-4. Preparing a negative electrode plate>**

The method for preparing a negative electrode plate includes: mixing graphite as a negative active material, silicon-oxycarbon ceramic material (SiOC), conductive carbon black, and the binder at a weight ratio of graphite : SiOC : conductive carbon black: binder = 70:15:5:10, and then adding deionized water as a solvent, blending the mixture into a slurry with a solid content of 70%, and stirring the slurry evenly; and coating one surface of a 10 $\mu$m thick copper foil with the slurry evenly, and drying the copper foil at a temperature of 110 °C to obtain a negative electrode plate coated with a 150 $\mu$m thick negative active material layer on a single side, and then repeating the foregoing coating steps on the other surface of the negative electrode plate to obtain a negative electrode plate coated with the negative active material layer on both sides; and cutting the negative electrode plate into a sheet that is 74 mm $\times$ 867 mm in size.

**<1-5. Preparing an electrolytic solution>**

The method for preparing an electrolytic solution includes: mixing ethylene carbonate (EC), ethyl methyl carbonate (EMC), and diethyl carbonate (DEC) as organic solvents at mixed at weight ratio of 30:50:20 in a dry argon atmosphere, adding lithium hexafluorophosphate ($LiPF_6$) into the organic solvents to dissolve, and blending the mixture evenly to obtain an electrolytic solution in which a molar concentration of $LiPF_6$ is 1.15 mol/L.

**<1-6. Preparing a lithium-ion battery>**

The method for preparing a lithium-ion battery includes: using a 15 $\mu$m thick PE porous polymer film as a separator, sequentially stacking the positive electrode plate, the separator, and the negative electrode plate that are prepared above, placing the separator between the positive electrode and the negative electrode to serve a function of separation, and winding them to obtain an electrode assembly; and putting the electrode assembly into an outer package, injecting the prepared electrolytic solution, and performing packaging; and performing steps such as chemical formation, degassing, and edge trimming to obtain a lithium-ion battery.

## Embodiment 2

This embodiment is almost identical to Embodiment 1 except that, in preparing the copolymer in section (1-1), the molar ratio of the monomers is changed to 60:40, as shown in Table 1, and the weight ratio of the copolymer, emulsifier, defoamer, and deionized water in the binder is changed to 40%:2%:0.05%:57.95%.

## Embodiment 3

This embodiment is almost identical to Embodiment 1 except that, in preparing the copolymer in section (1-1), as shown in Table 1, the molar ratio of the monomers is changed to 95:5, and the weight ratio of the copolymer, emulsifier, defoamer, and deionized water in the binder is changed to 40%:4.5%:0.08%:55.42%.

## Embodiment 4

This embodiment is almost identical to Embodiment 1 except that, in preparing the copolymer in section (1-1), as shown in Table 1, the types of the monomers are changed to propylene and butadiene, the molar ratio of the monomers is 30:70, and the weight ratio of the copolymer, emulsifier, defoamer, and deionized water in the binder is changed to 40%:2%:0.05%:57.95%.

## Embodiment 5

This embodiment is almost identical to Embodiment 1 except that, in preparing the copolymer in section (1-1), as shown in Table 1, the types of the monomers are changed to propylene and butadiene, the molar ratio of the monomers is 60:40, and the weight ratio of the copolymer, emulsifier, defoamer, and deionized water in the binder is changed to 40%:2%:0.05%:57.95%.

## Embodiment 6

This embodiment is almost identical to Embodiment 1 except that, in preparing the copolymer in section (1-1), as shown in Table 1, the types of the monomers are changed to propylene and butadiene, the molar ratio of the monomers is 90:10, and the weight ratio of the copolymer, emulsifier, defoamer, and deionized water in the binder is changed to 40%:2%:0.05%:57.95%.

## Embodiment 7

### <2-1. Preparing a copolymer>

The method for preparing a copolymer includes: in a 1 L stainless steel reaction vessel, under protection of nitrogen, adding 77 volume units (vol%) of hexane solvent, 19 volume units (vol%) of hexane solution with ferrocene as a main catalyst (the content of ferrocene is 70 mg/L), and 4 volume units (vol%) of hexane solution with methylaluminoxane as a cocatalyst (the content of methylaluminoxane is 10 mg/L), and then adding ethyl acrylate, and feeding in propylene, increasing the temperature to 50 °C, controlling the pressure of the reaction vessel to be 0.4 MPa, adjusting the dosage of ethyl acrylate/propylene so that the molar ratio between the first monomer and the second monomer is 30:70, leaving the reaction to last for 1 hour, and then terminating the reaction by using acidified ethanol, and washing a resulting product for 3 times by using anhydrous ethanol, filtering the product, and putting the product into a 60 °C vacuum drying oven to dry for 4 hours.

### <2-2. Preparing a binder>

The prepared propylene-ethyl acrylate copolymer is mixed with emulsifier, defoamer, and deionized water at a weight ratio of 40%:0.2%:0.009%:59.791% to obtain a binder.

### <2-3. Preparing a positive electrode plate>

The method for preparing a positive electrode plate includes: mixing lithium cobalt oxide as a positive active material, conductive carbon black, and the binder at a weight ratio of lithium cobalt oxide : conductive carbon black : binder = 97.5:1.0:1.5, and then adding NMP as a solvent, blending the mixture into a slurry with a solid content of 75%, and stirring the slurry evenly; coating one surface of a 12 $\mu$m thick aluminum foil with the slurry evenly, and drying the aluminum foil at a temperature of 90 °C to obtain a positive electrode plate on which the coating thickness is 100 μm, and then repeating the foregoing steps on the other surface of the positive electrode plate to obtain a positive electrode plate coated with the positive active material layer on both sides; and cutting the positive electrode plate into a sheet that is 74 mm × 867 mm in size.

### <2-4. Preparing a negative electrode plate>

The method for preparing a negative electrode plate includes: mixing graphite (graphite) as a negative active material, conductive carbon black (Super P), and the binder at a weight ratio of graphite : conductive carbon black: binder = 96:1.5:2.5, and then adding deionized water as a solvent, blending the mixture into a slurry with a solid content of 70%, and stirring the slurry evenly; and coating one surface of a 10 μm thick copper foil with the slurry evenly, and drying the copper foil at a temperature of 110 °C to obtain a negative electrode plate coated with a 150 μm thick negative active material layer on a single side, and then repeating the foregoing coating steps on the other surface of the negative electrode plate to obtain a negative electrode plate coated with the negative active material layer on both sides; and cutting the negative electrode plate into a sheet that is 74 mm × 867 mm in size.

### <2-5. Preparing an electrolytic solution>

Identical to section 1-5.

### <2-6. Preparing a lithium-ion battery>

Identical to section 1-6.

### Embodiment 8

This embodiment is almost identical to Embodiment 7 except that, in preparing the copolymer in section (2-1), the molar ratio of the monomers is changed to 60:40, as shown in Table 1.

### Embodiment 9

This embodiment is almost identical to Embodiment 7 except that, in preparing the copolymer in section (2-1), the molar ratio of the monomers is changed to 90:10, as shown in Table 1.

### Embodiment 10

### <3-1. Preparing a copolymer>

The method for preparing a copolymer includes: in a 1 L stainless steel reaction vessel, under protection of nitrogen, adding 77 volume units (vol%) of hexane solvent, 19 volume units (vol%) of hexane solution with ferrocene as a main catalyst (the content of ferrocene is 70 mg/L), and 4 volume units (vol%) of hexane solution with methylaluminoxane as a cocatalyst (the content of methylaluminoxane is 10 mg/L), and then adding ethyl acrylate, and feeding in ethylene and propylene, increasing the temperature to 50 °C, controlling the pressure of the reaction vessel to be 0.4 Mpa, adjusting the dosage of ethyl acrylate/ethylene/propylene so that the molar ratio between the first monomer and the second monomer is 30:70 (the ethylene monomer and the ethyl acrylate have equal molar percent), leaving the reaction to last for 1 hour, and then terminating the reaction by using acidified ethanol, and washing a resulting product for 3 times by using anhydrous ethanol, filtering the product, and putting the product into a 60 °C vacuum drying oven to dry for 4 hours.

### <3-2. Preparing a binder>

The prepared propylene-ethylene-ethyl acrylate copolymer is mixed with emulsifier, defoamer, and deionized water at a weight ratio of 40%:2%:0.05%:57.95% to obtain a binder.

### <3-3. Preparing a positive electrode plate>

Identical to section 1-3.

**<3-4. Preparing a negative electrode plate>**

Identical to section 1-4.

**<3-5. Preparing an electrolytic solution>**

Identical to section 1-5.

**<3-6. Preparing a lithium-ion battery>**

Identical to section 1-6.

**Embodiment 11**

This embodiment is almost identical to Embodiment 10 except that, in preparing the copolymer in section (3-1), the molar ratio of the monomers is changed to 60:40, as shown in Table 1.

**Embodiment 12**

This embodiment is almost identical to Embodiment 10 except that, in preparing the copolymer in section (3-1), the molar ratio of the monomers is changed to 90:10, as shown in Table 1.

**Embodiment 13**

This embodiment is almost identical to Embodiment 2 except that the softening point of the copolymer is 73 °C.

**Embodiment 14**

This embodiment is almost identical to Embodiment 2 except that the softening point of the copolymer is 82 °C.

**Embodiment 15**

This embodiment is almost identical to Embodiment 2 except that the softening point of the copolymer is 88 °C.

**Embodiment 16**

This embodiment is almost identical to Embodiment 2 except that the weight-average molecular weight of the copolymer is 500.

**Embodiment 17**

This embodiment is almost identical to Embodiment 2 except that the weight-average molecular weight of the copolymer is 20,000.

**Embodiment 18**

This embodiment is almost identical to Embodiment 2 except that the weight-average molecular weight of the copolymer is 100,000.

**Embodiment 19**

This embodiment is almost identical to Embodiment 2 except that the crystallinity of the copolymer is 10.

**Embodiment 20**

This embodiment is almost identical to Embodiment 2 except that the crystallinity of the copolymer is 40.

**Embodiment 21**

This embodiment is almost identical to Embodiment 2 except that D50 of the copolymer is 0.5 $\mu$m.

**Embodiment 22**

This embodiment is almost identical to Embodiment 2 except that D50 of the copolymer is 3.5 $\mu$m.

**Embodiment 23**

This embodiment is almost identical to Embodiment 2 except that D50 of the copolymer is 5 $\mu$m.

**Embodiment 24**

This embodiment is almost identical to Embodiment 2 except that the weight percent of the copolymer in the binder is 10% and the weight percent of water in the binder is 87.95%.

**Embodiment 25**

This embodiment is almost identical to Embodiment 2 except that the weight percent of the copolymer in the binder is 35% and the weight percent of water in the binder is 62.95%.

**Embodiment 26**

This embodiment is almost identical to Embodiment 2 except that the weight percent of the copolymer in the binder is 45% and the weight percent of water in the binder is 52.95%.

**Embodiment 27**

This embodiment is almost identical to Embodiment 2 except that the weight percent of the copolymer in the binder is 55% and the weight percent of water in the binder is 42.95%.

**Embodiment 28**

This embodiment is almost identical to Embodiment 2 except section <Preparing a lithium-ion battery>. In this embodiment, a process of preparing a lithium-ion battery includes:
using a 15 $\mu$m thick PE porous polymer film as a separator, and coating both sides of the separator with the binder prepared in Embodiment 1, where the thickness of the coating on each side is 3 $\mu$m; and sequentially stacking the positive electrode plate, the separator coated with the binder, and the negative electrode plate, placing the separator between the positive electrode and the negative electrode to serve a function of separation, and winding them to obtain an electrode assembly; and putting the electrode assembly into an outer package, injecting the prepared electrolytic solution, and performing packaging; and performing steps such as chemical formation, degassing, and edge trimming to obtain a lithium-ion battery.

**Comparative Embodiment 1**

This embodiment is almost identical to Embodiment 2 except that the binder is PVDF.

**Comparative Embodiment 2**

This embodiment is almost identical to Embodiment 2 except that the binder is polyacrylate.

**Comparative Embodiment 3**

This embodiment is almost identical to Embodiment 2 except that the binder is sodium carboxymethyl cellulose.

**Comparative Embodiment 4**

This embodiment is almost identical to Embodiment 1 except that, in preparing the copolymer in section (1-1), the molar ratio of the propylene monomer and the ethylene monomer is changed to 25:75, and the softening point and crystallinity of the copolymer are changed accordingly, as shown in Table 1.

The preparation parameters and test results of the embodiments and comparative embodiments are shown in Table 1 below:

**Table 1 Preparation parameters and test results of embodiments and comparative embodiments**

| | First monomer | Second monomer | Ratio between first monomer and second monomer (mol/%) | Softening point of copolymer (°C) | Weight-average molecular weight of copolymer | Crystallinity (%) | D50 of copolymer (μm) | Weight percent of copolymer (wt%) | Swelling degree (%) | Bonding force after hot calendering (N/m) | Bonding force after soaking in electrolytic solution (N/m) | Cycle capacity retention rate (%) |
|---|---|---|---|---|---|---|---|---|---|---|---|---|
| Embodiment 1 | Propylene | Ethylene | 30:70 | 80 | 10000 | 30 | 2 | 40 | 27 | 773 | 615 | 93.5 |
| Embodiment 2 | Propylene | Ethylene | 60:40 | 80 | 10000 | 30 | 2 | 40 | 17 | 844 | 670 | 95 |
| Embodiment 3 | Propylene | Ethylene | 95:5 | 80 | 10000 | 30 | 2 | 40 | 33 | 628 | 536 | 92.6 |
| Embodiment 4 | Propylene | Butadiene | 30:70 | 80 | 10000 | 30 | 2 | 40 | 24 | 762 | 580 | 93.1 |
| Embodiment 5 | Propylene | Butadiene | 60:40 | 80 | 10000 | 30 | 2 | 40 | 13 | 787 | 602 | 94.3 |
| Embodiment 6 | Propylene | Butadiene | 90:10 | 80 | 10000 | 30 | 2 | 40 | 29 | 711 | 596 | 93.2 |
| Embodiment 7 | Propylene | Ethyl acrylate | 30:70 | 80 | 10000 | 30 | 2 | 40 | 23 | 824 | 675 | 92.6 |
| Embodiment 8 | Propylene | Ethyl acrylate | 60:40 | 80 | 10000 | 30 | 2 | 40 | 15 | 876 | 737 | 93.5 |
| Embodiment 9 | Propylene | Ethyl acrylate | 90:10 | 80 | 10000 | 30 | 2 | 40 | 30 | 784 | 640 | 92.1 |
| Embodiment 10 | Propylene | Ethylene and ethyl acrylate | 30:70 | 80 | 10000 | 30 | 2 | 40 | 24 | 948 | 806 | 95.1 |
| Embodiment 11 | Propylene | Ethylene and ethyl acrylate | 60:40 | 80 | 10000 | 30 | 2 | 40 | 16 | 989 | 857 | 94.2 |

(continued)

| | First monomer | Second monomer | Ratio between first monomer and second monomer (mol/%) | Softening point of copolymer (°C) | Weight-average molecular weight of copolymer | Crystallinity (%) | D50 of copolymer (μm) | Weight percent of copolymer (wt%) | Swelling degree (%) | Bonding force after hot calendering (N/m) | Bonding force after soaking in electrolytic solution (N/m) | Cycle capacity retention rate (%) |
|---|---|---|---|---|---|---|---|---|---|---|---|---|
| Embodiment 12 | Propylene | Ethylene and ethyl acrylate | 90:10 | 80 | 10000 | 30 | 2 | 40 | 28 | 870 | 766 | 94.6 |
| Embodiment 13 | Propylene | Ethylene | 60:40 | 73 | 10000 | 30 | 2 | 40 | 22 | 794 | 681 | 92 |
| Embodiment 14 | Propylene | Ethylene | 60:40 | 82 | 10000 | 30 | 2 | 40 | 15 | 850 | 675 | 93.1 |
| Embodiment 15 | Propylene | Ethylene | 60:40 | 88 | 10000 | 30 | 2 | 40 | 9 | 883 | 712 | 92.5 |
| Embodiment 16 | Propylene | Ethylene | 60:40 | 80 | 500 | 30 | 2 | 40 | 53 | 512 | 430 | 92 |
| Embodiment 17 | Propylene | Ethylene | 60:40 | 80 | 20000 | 30 | 2 | 40 | 11 | 881 | 731 | 91 |
| Embodiment 18 | Propylene | Ethylene | 60:40 | 80 | 100000 | 30 | 2 | 40 | 10 | 538 | 441 | 93 |
| Embodiment 19 | Propylene | Ethylene | 60:40 | 60 | 10000 | 10 | 2 | 40 | 17 | 844 | 670 | 93.5 |
| Embodiment 20 | Propylene | Ethylene | 60:40 | 85 / 85 | 10000 | 40 | 2 | 40 | 24 | 868 | 734 / 734 | 95 |
| Embodiment 21 | Propylene | Ethylene | 60:40 | 80 | 10000 | 30 | 0.5 | 40 | 53 | 986 | 834 | 94 / 91 |
| Embodiment 22 | Propylene | Ethylene | 60:40 | 80 | 10000 | 30 | 3.5 | 40 | 24 | 882 | 767 | 91.2 |
| Embodiment 23 | Propylene | Ethylene | 60:40 | 80 | 10000 | 30 | 5 | 40 | 12 | 751 | 656 | 92.1 |

| | First monomer | Second monomer | Ratio between first monomer and second monomer (mol/%) | Softening point of copolymer (°C) | Weight-average molecular weight of copolymer | Crystallinity (%) | D50 of copolymer (μm) | Weight percent of copolymer (wt%) | Swelling degree (%) | Bonding force after hot calendering (N/m) | Bonding force after soaking in electrolytic solution (N/m) | Cycle capacity retention rate (%) |
|---|---|---|---|---|---|---|---|---|---|---|---|---|
| Embodiment 24 | Propylene | Ethylene | 60:40 | 80 | 10000 | 30 | 2 | 10 | 14 | 513 | 489 | 92 |
| Embodiment 25 | Propylene | Ethylene | 60:40 | 80 | 10000 | 30 | 2 | 35 | 14 | 770 | 621 | 91.3 |
| Embodiment 26 | Propylene | Ethylene | 60:40 | 80 | 10000 | 30 | 2 | 45 | 14 | 874 | 733 | 91.4 |
| Embodiment 27 | Propylene | Ethylene | 60:40 | 80 | 10000 | 30 | 2 | 55 | 14 | 976 | 859 | 92.1 |
| Embodiment 28 | Propylene | Ethylene | 60:40 | 80 | 10000 | 30 | 2 | 40 | 17 | 846 | 672 | 92.2 |
| Comparative Embodiment 1 | PVDF | - | - | - | - | - | - | 40 | 60 | 10 | 0 | 89 |
| Comparative Embodiment 2 | Acrylate | - | - | - | - | - | - | 40 | 80 | 20 | 0 | 88 |
| Comparative Embodiment 3 | Sodium car-boxymethy 1 cellulose | - | - | - | - | - | - | 40 | 200 | 20 | 0 | 87 |
| Comparative Embodiment 4 | Propylene | Ethylene | 25:75 | 82 | 10000 | 35 | 2 | 40 | 23 | 513 | 419 | 83 |

EP 4 016 675 B1

19

As can be seen from Embodiments 1~28 and Comparative Embodiments 1~3, the swelling degree of the binder according to this application is significantly reduced, and the bonding force after hot calendering and the bonding force after soaking in the electrolytic solution are significantly increased. In addition, the cycle capacity retention rate of the lithium-ion battery containing the binder according to this application is significantly enhanced, indicating that the cycle performance of the battery is improved.

As can be seen from Embodiments 1~15, 17~23, 25~28, and Comparative Embodiment 4, the bonding force after hot calendering and the bonding force after soaking in the electrolytic solution are significantly increased in the lithium-ion battery containing the binder according to this application. In addition, the cycle capacity retention rate of the lithium-ion battery containing the binder according to this application is significantly enhanced. As can be seen from Embodiments 16 and 24 and Comparative Embodiment 4, the bonding force of the binder and the cycle capacity retention rate of the lithium-ion battery are significantly enhanced after the binder is soaked in the electrolytic solution, and the bonding force remains basically unchanged after hot calendering.

The softening point of the copolymer usually affects heat resistance. The weight-average molecular weight usually affects the bonding performance and the resistance to the electrolytic solution. The crystallinity usually affects regularity of the molecular structure. D50 usually affects the specific surface area. The content of the copolymer in the binder usually affects the content of active ingredients in the binder. As can be seen from Embodiments 13~27, the objectives of this application can be achieved as long as the foregoing parameters fall within the range specified in this application, whereby the binder according to the application achieves a low swelling degree and a high bonding force and the lithium-ion battery exhibits high cycle performance.

As can be seen from Embodiment 28 and Embodiment 2, after both sides of the separator are coated with the binder, the bonding force after hot calendering and the bonding force after soaking in the electrolytic solution are further increased, and the cycle performance of the lithium-ion battery is basically unchanged.

The foregoing descriptions are merely exemplary embodiments of this application, but are not intended to limit this application.

**Claims**

1. A binder comprising:

   - a copolymer; **characterized in that**, the copolymer comprises a polymer formed by copolymerizing a first monomer and a second monomer, the first monomer is a propylene monomer, a crystallinity of the copolymer is 10% to 40%, the crystallinity being calculated by using a differential scanning calorimeter method, a molar percent of the first monomer in the total amount of all monomers in the copolymer is 30 mol% to 95 mol%, and a molar percent of the second monomer in the total amount of all monomers in the copolymer is 5 mol% to 70 mol%, and further comprising
   - an emulsifier, a defoamer, and water; a weight percent of the copolymer in a total weight of the binder is 10 wt% to 50 wt%, a weight percent of the emulsifier in the total weight of the binder is 0.1 wt% to 5 wt%, and a weight percent of the defoamer in the total weight of the binder is 0.0001% to 0.1%, and a remainder is water.

2. The binder according to claim **1, characterized in that**, the second monomer is one or more selected from the group consisting of ethylene, butadiene, isoprene, styrene, acrylonitrile, ethylene oxide, propylene oxide, acrylate, vinyl acetate, caprolactone, and maleic anhydride.

3. The binder according to claim **1, characterized in that**, the copolymer has one or more of the following properties:

   a softening point of the copolymer is 70 °C to 90 °C, the softening point being measured by using the differential scanning calorimeter method;
   a weight-average molecular weight of the copolymer is 500 to 1,000,000; and
   D50 of the copolymer is 0.5 μm to 5 μm, the particle size D50 being determined by using a laser particle analyzer.

4. The binder according to claim **1, characterized in that**, the emulsifier comprises one or more selected from the group consisting of an anionic emulsifier, a cationic emulsifier, and a nonionic emulsifier; the anionic emulsifier comprises one or more selected from the group consisting of fatty acid soap, alkyl sulfate, alkylbenzene sulfonate, and phosphate; the cationic emulsifier comprises one or more selected from the group consisting of N-dodecyldimethylamine, amine derivative, and quaternary ammonium salt; and the nonionic emulsifier comprises one or more selected from the group consisting of polyoxyethylene ether, polyoxypropylene ether, ethylene oxide, propylene oxide block copolymer, polyol fatty acid ester, and polyvinyl alcohol.

**5.** The binder according to claim **1, characterized in that**, the defoamer comprises one or more selected from the group consisting of alcohol, fatty acid, fatty acid ester, phosphoric acid ester, mineral oil, amide, ethylene oxide, propylene oxide copolymer, polydimethylsiloxane, and a siloxane copolymer modified and grafted with a polyether segment or a polysiloxane segment.

**6.** The binder according to claim **1, characterized in that**, a swelling degree of the binder in an electrolytic solution is 0 to 55%, the swelling degree being determined by using the following method: drying a dispersed solution containing the binder at 80 °C to form an adhesive film that is approximately 2 mm~3mm in thickness, cutting the adhesive film to obtain an adhesive film sample whose weight ranges from 1 g to 2 g, weighing the adhesive film sample before soaking in the electrolytic solution, denoted as $W_1$, soaking the adhesive film sample in the electrolytic solution at 60 °C for 7 days (the weight ratio of the electrolytic solution to the adhesive film sample is 50:1, and the weight ratio of ingredients of the electrolytic solution is ethylene carbonate : propylene carbonate : diethyl carbonate : ethyl propionate = 30:10:30:30), wiping off the solvent on the surface of the adhesive film sample, weighing the swollen adhesive film sample, denoted as $W_2$, and calculating the swelling degree $\triangle W_1$ of the adhesive film sample according to the following formula: $\triangle W_1 = (W_2 - W_1)/W_1 \times 100\%$, where, $W_1$ represents the weight of the adhesive film sample before soaking in the electrolytic solution, and $W_2$ represents the weight of the adhesive film sample after soaking in the electrolytic solution.

**7.** An electrochemical device, comprising an electrode plate, **characterized in that**, the electrode plate comprises the binder according to any one of claims **1** to **6.**

**8.** The electrochemical device according to claim **7, characterized in that**, the electrode plate comprises an electrode active material layer and a current collector, and a bonding force between the electrode active material layer and the current collector is 500 N/m to 1,000 N/m, the bonding force being determined by using the following method: soaking the electrode plate in the electrolytic solution for 48 h, cutting the electrode plate into a long-strip-shaped electrode plate sample that has a length and a width (for example, $1 \times 2$ cm), fixing the copper foil (that is, current collector) side of the electrode plate sample onto an aluminum sheet by using adhesive tape, affixing the side coated with the slurry (that is, the active material layer) onto a 3M adhesive tape, slowly peeling off the 3M adhesive tape from the surface of the electrode plate sample at an angle of 180° by using a versatile tensile tester until the active material layer is separated from the current collector, recording a stable tensile force at the time of the separation, and calculating, based on the measured values, the bonding force of the binder that has been soaked in the electrolytic solution.

**9.** An electronic device, comprising the electrochemical device according to any one of claims **7** to **8.**

**Patentansprüche**

**1.** Bindemittel, umfassend:

- ein Copolymer; **dadurch gekennzeichnet, dass** das Copolymer ein Polymer umfasst, das durch Copolymerisieren eines ersten Monomers und eines zweiten Monomers gebildet wird, das erste Monomer ein Propylen-Monomer ist, eine Kristallinität des Copolymers 10 % bis 40 % beträgt, wobei die Kristallinität unter Verwendung eines dynamischen Differenzkalorimetrieverfahrens berechnet wird, ein Molanteil des ersten Monomers in der Gesamtmenge aller Monomere im Copolymer 30 Mol-% bis 95 Mol-% beträgt, und ein Molanteil des zweiten Monomers in der Gesamtmenge aller Monomere im Copolymer 5 Mol-% bis 70 Mol-% beträgt, und weiter umfassend
- einen Emulgator, einen Entschäumer und Wasser; wobei ein Gewichtsanteil des Copolymers in einem Gesamtgewicht des Bindemittels 10 Gew.-% bis 50 Gew.-% beträgt, ein Gewichtsanteil des Emulgators im Gesamtgewicht des Bindemittels 0,1 Gew.-% bis 5 Gew.-% beträgt, und ein Gewichtsanteil des Entschäumers im Gesamtgewicht des Bindemittels 0,0001 % bis 0,1 % beträgt, und ein Rest Wasser ist.

**2.** Bindemittel nach Anspruch **1, dadurch gekennzeichnet, dass** das zweite Monomer eines oder mehrere ist, ausgewählt aus der Gruppe bestehend aus Ethylen, Butadien, Isopren, Styrol, Acrylnitril, Ethylenoxid, Propylenoxid, Acrylat, Vinylacetat, Caprolacton und Maleinanhydrid.

**3.** Bindemittel nach Anspruch **1, dadurch gekennzeichnet, dass** das Copolymer eine oder mehrere der folgenden Eigenschaften aufweist:

ein Erweichungspunkt des Copolymers beträgt 70 °C bis 90 °C, wobei der Erweichungspunkt unter Verwendung des dynamischen Differenzkalorimetrieverfahrens gemessen wird;

ein gewichtsmittleres Molekulargewicht des Copolymers beträgt 500 bis 1.000.000; und

D50 des Copolymers beträgt 0,5 $\mu$m bis 5 $\mu$m, wobei die Partikelgröße D50 unter Verwendung eines Laserpartikelanalysators bestimmt wird.

4. Bindemittel nach Anspruch **1, dadurch gekennzeichnet, dass** der Emulgator einen oder mehrerer umfasst, ausgewählt aus der Gruppe bestehend aus einem anionischen Emulgator, einem kationischen Emulgator und einem nichtionischen Emulgator; der anionische Emulgator einen oder mehrere umfasst, ausgewählt aus der Gruppe bestehend aus Fettsäureseife, Alkylsulfat, Alkylbenzolsulfonat und Phosphat; der kationische Emulgator einen oder mehrere umfasst, ausgewählt aus der Gruppe bestehend aus N-Dodecyldimethylamin, Aminderivat und quaternärem Ammoniumsalz; und der nichtionische Emulgator einen oder mehrere umfasst, ausgewählt aus der Gruppe bestehend aus Polyoxyethylenether, Polyoxypropylenether, Ethylenoxid, Propylenoxid-Blockcopolymer, Polyolfettsäureester und Polyvinylalkohol.

5. Bindemittel nach Anspruch **1, dadurch gekennzeichnet, dass** der Entschäumer einen oder mehrere umfasst, ausgewählt aus der Gruppe bestehend aus Alkohol, Fettsäure, Fettsäureester, Phosphorsäureester, Mineralöl, Amid, Ethylenoxid, Propylenoxid-Copolymer, Polydimethylsiloxan und einem Siloxan-Copolymer, das mit einem Polyethersegment oder einem Polysiloxansegment modifiziert und gepfropft wurde.

6. Bindemittel nach Anspruch **1, dadurch gekennzeichnet, dass** ein Quellgrad des Bindemittels in einer Elektrolytlösung 0 bis 55 % beträgt, wobei der Quellgrad unter Verwendung des folgenden Verfahrens bestimmt wird: Trocknen einer dispergierten Lösung, die das Bindemittel enthält, bei 80 °C, um einen Klebefilm zu bilden, der ungefähr 2 mm~3 mm dick ist, Zuschneiden des Klebefilms, um eine Klebefilmprobe zu erhalten, deren Gewicht im Bereich von 1 g bis 2 g liegt, Wiegen der Klebefilmprobe vor dem Tränken in der Elektrolytlösung, die als $W_1$ bezeichnet wird, Tränken der Klebefilmprobe in der Elektrolytlösung 7 Tage lang bei 60 °C (das Gewichtsverhältnis der Elektrolytlösung zur Klebefilmprobe beträgt 50:1, und das Gewichtsverhältnis der Inhaltsstoffe der Elektrolytlösung Ethylencarbonat : Propylencarbonat : Diethylcarbonat : Ethylpropionat = 30:10:30:30), Abwischen des Lösungsmittels auf der Oberfläche der Klebefilmprobe, Wiegen der gequollenen Klebefilmprobe, die als $W_2$ bezeichnet wird, und Berechnen des Quellgrads $\Delta W_1$ der Klebefilmprobe nach folgender Formel: $\Delta W_1 = (W_2 - W_1)/W_1 \times 100\,\%$, wobei $W_1$ das Gewicht der Klebefilmprobe vor dem Tränken in der Elektrolytlösung darstellt und $W_2$ das Gewicht der Klebefilmprobe nach dem Tränken in der Elektrolytlösung darstellt.

7. Elektrochemische Vorrichtung, die eine Elektrodenplatte umfasst, **dadurch gekennzeichnet, dass** die Elektrodenplatte das Bindemittel nach einem der Ansprüche **1** bis **6** umfasst.

8. Elektrochemische Vorrichtung nach Anspruch **7, dadurch gekennzeichnet, dass** die Elektrodenplatte eine Elektrodenaktivmaterialschicht und einen Stromkollektor umfasst und eine Bindekraft zwischen der Elektrodenaktivmaterialschicht und dem Stromkollektor 500 N/m bis 1.000 N/m beträgt, wobei die Bindekraft unter Verwendung des folgenden Verfahrens bestimmt wird: Tränken der Elektrodenplatte 48 h lang in der Elektrolytlösung, Zuschneiden der Elektrodenplatte zu einer langen streifenförmigen Elektrodenplattenprobe, die eine Länge und eine Breite (zum Beispiel 1×2 cm) aufweist, Befestigen der Kupferfolien- (d. h. Stromkollektor-) Seite der Elektrodenplattenprobe auf einem Aluminiumblech unter Verwendung von Klebeband, Fixieren der mit der Aufschlämmung (d. h. der Aktivmaterialschicht) beschichteten Seite auf einem 3M-Klebeband, langsames Abziehen des 3M-Klebebandes von der Oberfläche der Elektrodenplattenprobe in einem Winkel von 180° unter Verwendung eines vielseitigen Zugprüfgeräts, bis die Aktivmaterialschicht vom Stromkollektor getrennt ist, Aufzeichnen einer stabilen Zugkraft zum Zeitpunkt der Trennung und Berechnen, auf Basis der gemessenen Werte, der Bindekraft des Bindemittels, das in der Elektrolytlösung getränkt wurde.

9. Elektronische Vorrichtung, die die elektrochemische Vorrichtung nach einem der Ansprüche **7** bis **8** umfasst.

## Revendications

1. Liant comprenant :

- un copolymère ; **caractérisé en ce que** le copolymère comprend un polymère formé par la copolymérisation d'un premier monomère et d'un second monomère, le premier monomère est un monomère de propylène, la cristallinité du copolymère est de 10 % à 40 %, la cristallinité étant calculée en utilisant une méthode de calorimètre différentiel à balayage, un pourcentage molaire du premier monomère dans la quantité totale de tous les monomères du copolymère est de 30 mol% à 95 mol%, et un pourcentage molaire du second monomère dans la quantité totale de tous les monomères du copolymère est compris de 5 mol% à 70 mol%, et comprenant en outre

- un émulsifiant, un antimousse et de l'eau ; le pourcentage en poids du copolymère par rapport au poids total du liant est compris entre 10 % en poids et 50 % en poids, le pourcentage en poids de l'émulsifiant par rapport au poids total du liant est compris entre 0,1 % en poids et 5 % en poids, et le pourcentage en poids de l'antimousse par rapport au poids total du liant est compris entre 0,0001 % en poids et 0,1 % en poids, et le reste est de l'eau.

2. Liant selon la revendication **1, caractérisé en ce que** le second monomère est un ou plusieurs monomères choisis dans le groupe constitué par l'éthylène, le butadiène, l'isoprène, le styrène, l'acrylonitrile, l'oxyde d'éthylène, l'oxyde de propylène, l'acrylate, l'acétate de vinyle, la caprolactone et l'anhydride maléique.

3. Liant selon la revendication **1, caractérisé en ce que**, le copolymère a une ou plusieurs des propriétés suivantes :

un point de ramollissement du copolymère est de 70 °C à 90 °C, le point de ramollissement étant mesuré en utilisant la méthode du calorimètre différentiel à balayage;
un poids moléculaire moyen en poids du copolymère est de 500 à 1 000 000 ; et
D50 du copolymère est de 0,5 $\mu$m à 5 $\mu$m, la taille de particule D50 étant déterminée en utilisant un analyseur de particules laser.

4. Liant selon la revendication **1, caractérisé en ce que** l'émulsifiant comprend un ou plusieurs émulsifiants choisis dans le groupe constitué d'un émulsifiant anionique, d'un émulsifiant cationique et d'un émulsifiant non ionique ; l'émulsifiant anionique comprend un ou plusieurs émulsifiants choisis dans le groupe constitué d'un savon d'acide gras, d'un sulfate d'alkyle, d'un sulfonate d'alkylbenzène et d'un phosphate ; l'émulsifiant cationique comprend un ou plusieurs émulsifiants choisis dans le groupe constitué par la N-dodécyldiméthylamine, un dérivé d'amine et un sel d'ammonium quaternaire ; et l'émulsifiant non ionique comprend un ou plusieurs émulsifiants choisis dans le groupe constitué par l'éther de polyoxyéthylène, l'éther de polyoxypropylène, l'oxyde d'éthylène, le copolymère à blocs d'oxyde de propylène, l'ester d'acide gras de polyol et l'alcool polyvinylique.

5. Liant selon la revendication **1, caractérisé en ce que** l'antimousse comprend un ou plusieurs éléments choisis dans le groupe constitué par alcool, acide gras, ester d'acide gras, ester d'acide phosphorique, huile minérale, amide, oxyde d'éthylène, copolymère d'oxyde de propylène, polydiméthylsiloxane, et un copolymère de siloxane modifié et greffé avec un segment de polyéther ou un segment de polysiloxane.

6. Liant selon la revendication **1, caractérisé en ce que** le degré de gonflement du liant dans une solution électrolytique est de 0 à 55%, le degré de gonflement étant déterminé en utilisant la méthode suivante : séchage d'une solution dispersée contenant le liant à 80 °C pour former un film adhésif d'une épaisseur d'environ 2 mm~3 mm, découpage du film adhésif pour obtenir un échantillon de film adhésif dont le poids est compris entre 1 g et 2 g, pesage de l'échantillon de film adhésif avant trempage dans la solution électrolytique, noté $W_1$, trempage de l'échantillon de film adhésif dans la solution électrolytique à 60 °C pendant 7 jours (le rapport pondéral entre la solution électrolytique et l'échantillon de film adhésif est de 50:1, et le rapport en poids des ingrédients de la solution électrolytique est le suivant : carbonate d'éthylène : carbonate de propylène : carbonate de diéthyle : propionate d'éthyle = 30:10:30:30), essuyer le solvant sur la surface de l'échantillon de film adhésif, peser l'échantillon de film adhésif gonflé, désigné par $W_2$, et calculer le degré de gonflement $\triangle W_1$ de l'échantillon de film adhésif selon la formule suivante : $\triangle W_1 = (W_2 - W_1)/W_1 \times 100\%$, où $W_1$ représente le poids de l'échantillon de film adhésif avant le trempage dans la solution électrolytique, et $W_2$ représente le poids de l'échantillon de film adhésif après le trempage dans la solution électrolytique.

7. Dispositif électrochimique, comprenant une plaque d'électrode, **caractérisé en ce que** la plaque d'électrode comprend le liant selon l'une quelconque des revendications **1** à **6**.

8. Dispositif électrochimique selon la revendication **7, caractérisé en ce que** la plaque d'électrode comprend une couche de matériau actif d'électrode et un collecteur de courant, et une force de liaison entre la couche de matériau actif d'électrode et le collecteur de courant est de 500 N/m à 1 000 N/m, la force de liaison étant déterminée en utilisant la méthode suivante : tremper la plaque d'électrode dans la solution électrolytique pendant 48 heures, découper la plaque d'électrode en un échantillon de plaque d'électrode en forme de longue bande qui a une longueur et une largeur (par exemple, 1 $\times$ 2 cm), fixer le côté feuille de cuivre (c'est-à-dire le collecteur de courant) de l'échantillon de plaque d'électrode sur une feuille d'aluminium à l'aide d'un ruban adhésif, fixer le côté recouvert de la suspension (c'est-à-dire la couche de matériau actif) sur un ruban adhésif 3M, décoller lentement le ruban adhésif 3M de la surface de l'échantillon de plaque d'électrode à un angle de 180° à l'aide d'un testeur de traction polyvalent jusqu'à ce que la couche de matériau actif soit séparée du collecteur de courant, enregistrer une force de traction stable au moment de la séparation et calculer, sur la base des valeurs mesurées, la force d'adhérence du liant qui a été trempé dans la solution électrolytique.

9. Dispositif électronique comprenant le dispositif électrochimique selon l'une des revendications **7** à **8.**

**EP 4 016 675 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020002449 A
- US 2003176579 A
- US 5461105 A
- US 2018057624 A
- US 2012231237 A